# EUROPEAN PATENT APPLICATION

(11) **EP 3 385 054 A1**
(43) Date of publication of application: **10.10.2018**
(21) Application number: 17164690.4
(22) Date of filing: 04.04.2017
(51) Int. Cl.: B29C 47/00, B29C 47/60, B29C 47/64, B29B 7/48

(54) **PROCESS AND APPARATUS FOR BLENDING IMMISCIBLE POLYMERS**

(71) Applicant: SABIC Global Technologies B.V., 4612 PX Bergen op Zoom (NL)
(72) Inventor: DUCHATEAU, Robbert, 6160 GA Geleen (NL); JASINSKA-WALC, Lidia, 6160 GA Geleen (NL); SCHIPPER, Ronald, Julianus, Peter, 6160 GA Geleen (NL)
(74) Representative: Sabic Intellectual Property Group

(57) **Abstract**

The invention relates to a process and apparatus for blending immiscible polymers, whereby at least two extruders screws, each comprise at least one melting zone and three to eight mixing zones, whereby the melting zone is a first mixing zone, whereby further the length of at least one mixing zone is between 4 and 15 times the diameter of the screw and the length of each of the other mixing zones is between 1 and 10 times the diameter of the screw, whereby further the combined length of the mixing zones of the screw is between 15 and 37 % of the length of the screw.

## Description

The invention relates to a process and apparatus for blending immiscible polymers, whereby at least two extruder screws, each comprise at least one melting zone and three to eight mixing zones, whereby the melting zone is a first mixing zone, whereby further the length of at least one mixing zone is between 4 and 15 times the diameter of the screw and the length of each of the other mixing zones is between 1 and 10 times the diameter of the screw, whereby further the combined length of the mixing zones of the screw is between 15 and 37 % of the length of the screw.

The blending of immiscible polymers is known in the art.

It is thereby known that an extruder screw can be optimized for distributive and dispersive mixing.

WO0034027 for example discloses such a screw optimized for blending immiscible polymers. The corresponding screw design is however complex. Moreover, shear demixing or degradation phenomena may occur.

The present invention thus addresses the limitations of the prior art by providing a simple design that surprisingly still allows to obtain high quality blends of immiscible polymers, especially for example by increasing the mixing while minimizing possible degradation and/or shear demixing phenomena.

The invention relates to a process and apparatus for blending immiscible polymers, whereby at least two extruder screws, each comprise at least one melting zone and at least three to eight mixing zones, whereby the melting zone is a first mixing zone, whereby further the length of at least one mixing zone is between 4 and 15 times the diameter of the screw and the length of the other each mixing zones is between 1 and 10 times the diameter of the screw, whereby further the length of the combined mixing zones is between 15 and 37 % of the length of the screw.

An apparatus according to the invention may thereby especially for example be an extruder, like a twin screw extruder. The invention may also be used for obtaining compounds/composites and/or nanocomposites, that may require the dispersion of at least one additive or filler in a polymer matrix.

The number of mixing zones as well as length of the mixing zones in combination with the length of the combined mixing zones allows to obtain high quality blends of immiscible polymers, especially for example by increasing the mixing while minimizing possible degradation and/or shear demixing phenomena.

Each mixing zone, may thereby for example comprise of mixing elements that lead to distributive mixing, such as for example mixing elements selected from the group of kneading blocks and/or kneading elements and/or mixing elements, such as especially for example Igel elements, screw mixing elements (SME) and/or turbine mixing elements (TME) and/or toothed mixing elements (TME) and/or ZME elements. This allows for the use of standard(ized) elements screw design while still blending immiscible polymers very well.

In an embodiment, the mixing elements in the melting zone, which is a first mixing zone, may be for example kneading blocks, especially kneading blocks with a 20° to 65°, preferably 25° to 60°, further preferred 25° to 50°, further preferred 30° to 45°, forward angle, followed by kneading blocks with a 40° to 90°, preferably 45° to 85°, further preferred 45° to 60°, forward angle, further followed by kneading blocks with a 25° to 65°, preferably 30° to 60°, further preferred 45° to 60°, backward angle. This may contribute to good mixing, while keeping a simple screw design.

A screw according to the invention may thereby comprise three to eight mixing zones, preferably four to six mixing zones, further preferred exactly four mixing zones. This may contribute to good mixing, while keeping a simple screw design.

In an embodiment, the mixing elements in at least one, preferably at least two, further preferred at least three, mixing zone(s) may be for example kneading blocks, especially kneading blocks with a 25° to 65°, preferably 35° to 60°, further preferred 45° to 60°, forward angle, followed by kneading blocks with a 25° to 65°, preferably 30° to 60°, further preferred 45° to 60°, backward angle. This may contribute to good mixing, while keeping the screw design fairly straightforward.

In the sense of the invention, expressions like "followed by" or "before" or "after" or similar statements may thereby refer to the overall material flow direction within the extruder during operations.

A screw according to the invention may thereby comprise transport zones before and after each the mixing zone. Transport zones may thereby for example be optimized for transporting polymer material through the extruder and/or to overcome possible pressure build up in the mixing zones.

The length of at least one transport or of each transport zone may be for example between 2 and 6 times the diameter of the screw, preferably between 3 and 5 times further preferred 4 times the diameter of the screw. This may contribute to transporting polymer material through the extruder and/or to overcome possible pressure build up in the mixing zones.

In an embodiment, the mixing elements in at least one, preferably at least two, further preferred at least three mixing zone(s) may be for example toothed mixing elements. This may further contribute to reduce possible degradation and/or shear demixing phenomena.

In an embodiment, the mixing elements in at least two, further preferred at least three, mixing zone(s) may be for example toothed mixing elements and the mixing elements in at least one mixing zone, which may preferably be distinct from the melting zone, may be for example kneading blocks, especially kneading blocks with a 25° to 65°, preferably 35° to 60°, further preferred 45° to 60°, forward angle, followed by kneading blocks with a 25° to 65°, preferably 30° to 60°, further preferred 45° to 60°, backward angle. This may contribute to good mixing, while keeping a simple screw design.

The length of at least one or exactly one mixing zone may be for example between 4 and 15 times, preferably between 4 to 10 times, further preferred between 4 to 6 times the diameter of the screw. This may contribute to good mixing, while also contributing to reduce possible degradation and/or shear demixing phenomena.

The length of at least one or of each other of the mixing zones (apart from the one mentioned here before) may be for example between 1 and 10 times the diameter of the screw, preferably between 1.5 and 7 times further preferred between 2 and 4 times, further preferred between > 2 and 3 times the diameter of the screw. This may contribute to good mixing, while also contributing to reduce possible degradation and/or shear demixing phenomena.

The combined length of the mixing zones of the screw may be for example between 15 and 37 %, preferably between 20 % and 35 %, further preferred between 30 % and 35 % of the length of the screw. This may contribute to good mixing, while also contributing to reduce possible degradation and/or shear demixing phenomena.

The length over diameter ratio (L/D) of the screw may be for example for between 20 and 80, preferably between 30 and 70, further preferred between 40 and 60.

The diameter of the screw may be for example between 10 mm and 150 mm, preferably between 20 mm and 130 mm, further preferred between 80 mm and 100 mm

The extruder may be heated at temperatures between for example 100° C and 300 °C.

The screw may be rotated in an rpm range of between for example 50 rpm and 500 rpm, preferably between 100 rpm and 300 rpm.

The process according to the invention may especially be used to produce blends immiscible polymers comprising or consisting of at least two or exactly two different polyolefins, like for example polyethylene and/or polypropylene and/or poly-1-butene and/or poly(4-methyl-1-pentene) and/or copolymers thereof and/or copolymers of ethylene or propylene with higher alpha-olefins, or at least one polyolefin, like for example polyethylene and/or polypropylene and/or poly-1-butene and/or poly(4-methyl-1-pentene) and/or copolymers thereof and/or copolymers of ethylene or propylene with higher alpha-olefins, and at least one or exactly one non-olefinic polymer, like for example a polycarbonate, a polyester, a polyether, a polyurethane, a polystyrene, a poly(phenylene oxide), a polyacrylate or a polyamide. The blends thus preferably comprise at least two immiscible polymers.

The process according to the invention may especially be used to produce blends immiscible polymers comprising or consisting of at least one or exactly one compatibilizer and at least two or exactly two different polyolefins, like for example polyethylene and/or polypropylene and/or poly-1-butene and/or poly(4-methyl-1-pentene) and/or copolymers thereof and/or copolymers of ethylene or propylene with higher alpha-olefins, or at least one polyolefin, like for example polyethylene and/or polypropylene and/or poly-1-butene and/or poly(4-methyl-1-pentene) and/or copolymers thereof and/or copolymers of ethylene or propylene with higher alpha-olefins, as well as at least one or exactly one non-olefinic polymer, like for example a polycarbonate, a polyester, a polyether, a polyurethane, a polystyrene, a poly(phenylene oxide), a polyacrylate or a polyamide. A compatibilizer may thereby especially for example be a copolymer comprising at least one polyolefinc part and one non-polyolefinic part, whereby each part may preferably be compatible with one of immiscible polymers of the blend(s). This may further help to improve the compatibility of the immiscible polymer and the quality of the blends.

### Examples:

To demonstrate the effect of the present invention blend of polypropylene (SABIC grade PP500) and polycarbonate (SABIC grade PC105) have been prepared under otherwise identical conditions in a twin screw extruder according to the invention and in a twin screw extruder that is not according to the invention (comparative example).

The electronic microscopy images obtained, thereby clearly show the smaller and better-distributed domains obtained in the inventive example.

### Preparation of uncompatibilized iPP/PC blends in the twin-screw extruder.

Example: PP500P/PC105 (80:20). i-PP (SABIC PP500P, MFR = 3 g·10 min⁻¹ (230 °C·2.16 kg⁻¹), 8.0 kg, *M*ₙ= 61.6 kg·mol⁻¹, Ð = 6.7), PC (SABIC PC105, MFR = 7 g·10 min⁻¹ (300 °C, 1.2 kg), 2.0 kg, *M*ₙ = 11.4 kg·mol⁻¹) were introduced to the extruder. The mixture was processed at temperatures of 160°C, 200°C, 230°C, 230°C, 240°C, 240°C, 240°C, 240°C, 260°C in the nine temperature zones of the Zamak Mercator EHP 2x20 Sline extruder. Prepared blends have been tested in terms of morphology and mechanical properties.

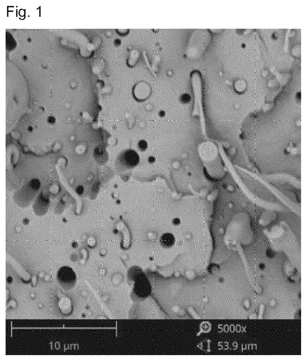

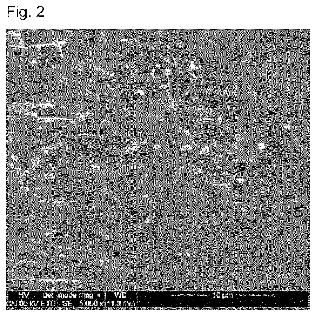

Fig 1 shows a blend obtained with a screw design not according to the present invention (comparative example), while Fig 2 shows a blend obtained with a screw design according to the present invention.
Fig 1 (comparative example) shows large domains of polycarbonate (SABIC grade PC105) within the polypropylene matrix (SABIC grade PP500P), poor adhesion between the phases and actual delamination.
Fig 2 shows much smaller domains of polycarbonate (SABIC grade PC105) within the polypropylene matrix (SABIC grade PP500P), much better adhesion between the phases and no delamination.

### Characterization.

*Scanning electron microscopy.* The morphology of the blends was examined with a scanning electron microscope SEM of freeze fractured samples. The analysis were performed using scanning electron microscope Phenom^{™} with a magnification range: 80 - 100,000 ×, digital zoom: 12 × (ProX/Pro). The samples were sputter coated using sputter coater with Au. For SEM analysis injection molded parts were used.

## Claims

1. An apparatus for blending immiscible polymers, wherein the apparatus comprises least two extruder screws, each comprising at least one melting zone and three to eight mixing zones, whereby the melting zone is a first mixing zone, whereby further the length of at least one mixing zone is between 4 and 15 times the diameter of the screw and the length of each of the other mixing zones is between 1 and 10 times the diameter of the screw, whereby further the combined length of the mixing zones of the screw is between 15 and 37 % of the length of the screw.

2. Apparatus according to claim 1, wherein each mixing zone comprises mixing elements that lead to distributive mixing.

3. Apparatus according to any of the claim 1-2, wherein each mixing zone, comprises mixing elements selected from the group of kneading blocks and/or toothed mixing elements and/or UC (MADDOCK) mixing elements and/or EGAN mixing elements and/or pin mixing elements and/or DULMAGE mixing elements and/or SAXON mixing elements and/or pineapple mixing elements and/or cavity transfer mixing element and/or slotted screw mixing elements.

4. Apparatus according to any of the claim 1-3, wherein the mixing elements in the melting zone, which is a first mixing zone, comprise or consist of kneading blocks.

5. Apparatus according to any of the claim 1-4, wherein the melting zone, which is a first mixing zone, comprises kneading blocks with a 30° to 65°, preferably 35° to 60°, further preferred 30° to 45°, forward angle, followed by kneading blocks with a 40° to 90°, preferably 45° to 90°, further preferred 45° to 60°, forward angle, further followed by kneading blocks with a 25° to 65°, preferably 30° to 60°, further preferred 45° to 60°, backward angle.

6. Apparatus according to any of the claim 1-5, wherein the extruder screw comprise four to six mixing zones, further preferred exactly four mixing zones.

7. Apparatus according to any of the claim 1-6, wherein the mixing elements in at least one, preferably at least two, further preferred at least three, mixing zone(s) are kneading blocks, preferably kneading blocks with a 25° to 65°, preferably 35° to 60°, further preferred 45° to 60°, forward angle, followed by kneading blocks with a 25° to 65°, preferably 30° to 60°, further preferred 45° to 60°, backward angle.

8. Apparatus according to any of the claim 1-7, wherein the extruder screw comprises transport zones before and after each the mixing zone and/or wherein the length of at least one transport or of each transport zone is between 2 and 6 times the diameter of the screw, preferably between 3 and 5 times further preferred 4 times the diameter of the screw.

9. Apparatus according to any of the claim 1-8, wherein the mixing elements in at least one, preferably at least two, further preferred at least three, mixing zone are toothed mixing elements.

10. Apparatus according to any of the claim 1-9, wherein the mixing elements in at least two, further preferred at least three, mixing zone(s) are toothed mixing elements and the mixing elements in at least one mixing zone, which may preferably be distinct from the melting zone, are kneading blocks, preferably kneading blocks with a 25° to 65°, preferably 35° to 60°, further preferred 45° to 60°, forward angle, followed by kneading blocks with a 25° to 65°, preferably 30° to 60°, further preferred 45° to 60°, backward angle. This may contribute to good mixing, while keeping a simple screw design.

11. Apparatus according to any of the claims 1-10, wherein the length of at least one or exactly one mixing zone is between 4 to 10 times, further preferred between 4 to 6 times, the diameter of the screw and/or wherein the length of at least one other or of each other of the mixing zone is between 1.5 and 7 times further preferred between 2 and 4 times, further preferred between > 2 and 3 times the diameter of the screw.

12. Apparatus according to any of the claims 1-11, wherein the combined length of the mixing zones of the screw is between 20 % and 35 %, further preferred between 30 % and 35 % of the length of the screw.

13. Apparatus according to any of the claims 1-12, wherein the length over diameter ratio (UD) of the screw may be for example for between 20 and 80, preferably between 30 and 70, further preferred between 40 and 60.

14. Process of using an apparatus according to any of the claims 1-13 to produce blends of immiscible polymers comprising or consisting of at least two or exactly two different polyolefins or at least one or exactly polyolefin and at least one non-olefinic polymer.

15. Process of using an apparatus according to any of the claims 1-13 to produce blends of immiscible polymers comprising or consisting of at least one or exactly one compatibilizer and at least two or exactly two different polyolefins, or at least one or exactly one polyolefin as well as at least one non-olefinic polymer.
